# EUROPÄISCHE PATENTSCHRIFT

(11) **EP 3 839 312 B1**
(45) Veröffentlichungstag und Bekanntmachung des Hinweises auf die Patenterteilung: **02.08.2023**
(21) Anmeldenummer: 20203866.7
(22) Anmeldetag: 26.10.2020
(51) Int. Cl.: F16L 13/14, F16L 25/00, F16L 33/01, F16L 33/26, F16L 33/207

(54) **VERBINDUNGSANORDNUNG ZUM ANSCHLIESSEN EINES WELLROHRS AN EINEN ANSCHLUSSSTUTZEN UND VERFAHREN ZUM HERSTELLEN EINER SOLCHEN VERBINDUNGSANORDNUNG**
CONNECTING ASSEMBLY FOR CONNECTING A CORRUGATED PIPE TO A CONNECTING PIECE AND METHOD FOR MANUFACTURING SUCH A CONNECTION ASSEMBLY
DISPOSITIF DE RACCORDEMENT PERMETTANT DE RACCORDER UN TUYAU ONDULÉ À UNE UNITÉ DE RACCORDEMENT ET PROCÉDÉ DE FABRICATION D'UN TEL AGENCEMENT DE RACCORDEMENT

(30) Priorität: 16.12.2019 DE 102019219657
(43) Veröffentlichungstag der Anmeldung: 23.06.2021
(73) Patentinhaber: ContiTech Techno-Chemie GmbH, 61184 Karben (DE)
(72) Erfinder: Kempf, Dominik, 30419 Hannover (DE); Mueller, Nicko, 30419 Hannover (DE)
(74) Vertreter: Continental Corporation

(56) Entgegenhaltungen:
- WO-A1-2019/145749
- DE-A1- 2 608 662
- DE-A1- 10 333 533

## Beschreibung

Die Erfindung betrifft eine Verbindungsanordnung an einem Ende eines Wellrohrs (1) mit einem Anschlussstutzen (2) und einem Adapter (3), wobei das Wellrohr (1) aus einem metallischen Werkstoff gebildet ist und einen Querschnitt mit wechselweise aufeinanderfolgenden Wellenbergen (10) und Wellentälern (11) aufweist und der Anschlussstutzen (2) aus einem duktilen Rohrabschnitt gebildet ist und der Adapter (3) aus einem metallischen Rohrabschnitt endseitig in das Wellrohr (1) und dieses axial fortsetzend eingebracht und stoffschlüssig mit dem Wellrohr (1) verbunden ist und das Wellrohr (1) mit dem Adapter (3) in den Anschlussstutzen (2) eingesteckt ist. Verbindungsanordnungen der eingangs genannten Art, insbesondere für sogenannte Hochdruck/Hochdicht-Verbindungen, wie sie beispielsweise für die Führung von Wasserstoff in Brennstoffzellen und dergleichen benötigt werden, sind bekannt und basieren überwiegend auf Basis von Metallkonturdichtungen, zum Beispiel mit Schneidkanten, die sich beim Herstellen der Verbindung formschlüssig verbinden, jedoch prinzipbedingt nicht stoffschlüssig dicht ausgebildet werden können. Geforderte niedrige Permeationsraten lassen sich von daher nur mit hohem Ressourceneinsatz und gleichzeitiger Senkung der Effizienz erreichen. Darüber hinaus sind Konturdichtungen zum Beispiel mittels Schneidkanten aufgrund der benötigten Präzision aufwendig herzustellen. Durch hohe Temperatur- und/oder Druckbelastungen können Konturdichtungen über die Zeit Einbußen in der Dichtheit aufzeigen.

Aus der DE 26 08 662 A1 ist es bekannt, in das Ende eines flexiblen Metallschlauchs ein Steckglied teilweise einzustecken und den Metallschlauch endseitig mit einem Flansch des Steckgliedes zu verschweißen, wobei eine Einhüllung des Metallschlauchs über das Ende des Metallschlauchs hinaus bis in einen Klemmbereich des Steckgliedes gezogen und dort mittels einer außenseitig aufgebrachten zylindrischen Muffe im Klemmbereich des Steckgliedes verklemmt wird. Anschließend wir der Rand der Muffe mitsamt des Randbereichs der Einhüllung mit dem Steckglied stoffschlüssig verschweißt. Dies ist sehr aufwendig und erfordert eine sorgfältige Längenabstimmung des Metallschlauchs und der demgegenüber am Steckglied vorstehenden Einhüllung und lässt hinsichtlich der erreichbaren mechanischen Festigkeit Raum für Verbesserungen.

Aufgabe der Erfindung ist es, eine verbesserte Verbindungsanordnung vorzuschlagen, die unter Optimierung von Kosten, Verbesserung der Qualität sowie der Prozesssicherheit und unter Minimierung und Vereinfachung der Prozessschritte für die Herstellung die Nachteile des Standes der Technik überwindet.

Zur Lösung der gestellten Aufgabe wird erfindungsgemäß eine Verbindungsanordnung gemäß den Merkmalen des Patentanspruches 1 vorgeschlagen.

Vorteilhafte Ausgestaltungen und Weiterbildungen der Erfindung sind Gegenstand der abhängigen Ansprüche.

Erfindungsgemäß wird auf Wellrohr aus metallischem Werkstoff zurückgegriffen, welches eine wirksame Permeationsbarriere darstellt. Zur Lösung der gestellten Aufgabe wird vorgeschlagen, dass ein Adapter aus einem metallischen Rohrabschnitt endseitig in das Wellrohr und dieses axial fortsetzend eingebracht und im Bereich mindestens eines Wellentals desselben stoffschlüssig mit dem Wellrohr verbunden ist, um eine dauerhaft zuverlässige Abdichtung in diesem Bereich sicherzustellen. Darüber hinaus wird der Anschlussstutzen, der aus einem duktilen Material gefertigt ist, so dimensioniert, dass das Wellrohr mit dem Adapter in den Anschlussstutzen eingesteckt werden kann. Der Anschlussstutzen wird umfänglich mit dem eingesteckten Wellrohr verpresst, um eine zugfeste, mechanisch belastbare Anbindung herzustellen und der Adapter wird entlang seiner Außenoberfläche ebenfalls stoffschlüssig mit der Innenoberfläche des Anschlussstutzens verbunden.

Erfindungsgemäß wird somit der das Wellrohr verlängernde Adapter einerseits im Wellrohr und andererseits im Anschlussstutzen stoffschlüssig verbunden, sodass die Verbindungsanordnung gemäß der Erfindung ausschließlich stoffschlüssige Dichtstellen vorsieht, die hinsichtlich der erreichbaren niedrigen Permeationsrate und der Dauerdichtigkeit einer Konturdichtung deutlich überlegen sind.

Die Dimensionierung des Anschlussstutzens zur Aufnahme des Wellrohrs und des dieses fortsetzenden Adapters ist dabei erfindungsgemäß so gewählt, dass der Anschlussstutzen gegenüber dem Wellrohr einen kleineren Durchmesser aufweist und wird zur Aufnahme des Wellrohres und des Adapters zu seinem Ende hin mit einer entsprechenden Aufweitung des Innendurchmessers versehen, die sich aufgrund des duktilen Materials leicht erzeugen lässt.

Nach einem weiteren Vorschlag der Erfindung wird der Anschlussstutzen zweifach abgestuft aufgeweitet, wobei das Wellrohr in die abgestufte Aufweitung mit dem größten Innendurchmesser eingesteckt und mit dieser verpresst ist und der Adapter in die abgestufte Aufweitung mit dem kleineren Innendurchmesser eingesteckt und stoffschlüssig mit dieser verbunden ist. Eine solche Ausgestaltung ist hinsichtlich der Dichtwirkung als auch hinsichtlich der mechanischen Festigkeit besonders belastbar ausgeführt.

Der Adapter wird nach einem weiteren Vorschlag der Erfindung mit mindestens einem, vorzugsweise dem zum axialen Ende nächstliegenden Wellental oder mehreren benachbarten Wellentälern des Wellrohres verschweißt, um die erfindungsgemäß vorgesehene stoffschlüssige Verbindung zum Wellrohr herzustellen.

Geeignete Schweißverfahren umfassen beispielsweise Laser-, Plasma-, WIG-Schweißen oder ähnliche Verfahren.

Darüber hinaus ist nach einem Vorschlag der Erfindung zur Schaffung höchster Permeationsbarrierewirkung vorgesehen, den Adapter aus einem Edelstahl-Rohrabschnitt zu bilden. Auch das Wellrohr selbst wird bevorzugt aus Edelstahl hergestellt, etwa durch Ablängen eines endlosen Edelstahl-Wellrohrs.

Zur Schaffung ausreichend hoher Formbeständigkeit auch bei hoher Druckbeaufschlagung und/oder hohen angreifenden oder resultierenden Zugkräften auf das Wellrohr kann dieses nach einem weiteren Vorschlag der Erfindung außenseitig mit einer Faserlage aus zugfesten Fasern, beispielsweise aus hochfesten Aramidfasern oder Stahldraht umhüllt sein. Darüber hinaus kann eine solche Faserlage zwischen das Wellrohr außenseitig umhüllenden Gummi- oder Kunststofflagen, zum Beispiel auf Basis von Polyamid (Nylon ^{®}) und dergleichen eingebettet sein, die das Wellrohr gleichermaßen umhüllen.

Zur Schaffung der erfindungsgemäß vorgesehenen stoffschlüssigen Verbindung des Adapters mit der Innenoberfläche des Anschlussstutzens kann eine Verschweißung, z.B. von der Außenseite her im Magnetic-Pulse-Verfahren vorgesehen sein. Alternativ kann auch eine Verklebung oder eine Verlötung vorgenommen werden, um die stoffschlüssige Verbindung auszubilden. Auch eine mechanische Verpressung wäre denkbar, jedoch sind stoffschlüssige Verbindungen im Hinblick auf die erzielbaren geringen Permeationsraten bevorzugt.

Der Anschlussstutzen ist bevorzugt aus einem Aluminium-Rohrabschnitt gebildet, jedoch können auch andere ausreichend duktilen Werkstoffe im Rahmen der Erfindung Verwendung finden.

Das Verfahren zum Herstellen einer solchen Verbindungsanordnung umfasst das Bereitstellen des an einen Anschlussstutzen anzuschließenden Wellrohrs und des Adapters, endseitiges Einbringen des Adapters in das Wellrohr und stoffschlüssiges Verbinden mit mindestens einem Wellental des Wellrohrs dergestalt, dass der Adapter das Wellrohr axial fortsetzt, Aufweiten des Anschlussendes des Anschlussstutzens und Einführen des Wellrohrs mit dem axial fortsetzenden Adapter in den Anschlussstutzen und Verpressen des das Wellrohr umgebenden Anschlussendes mit dem Wellrohr sowie das stoffschlüssiges Verbinden des in den Anschlussstutzen eingeführten Adapters mit dem Anschlussstutzen.

Erfindungsgemäß kommt es dabei auf die Reihenfolge der beiden auszubildenden stoffschlüssigen Verbindungen nicht an, d. h. es kann sowohl der Adapter zunächst im Wellrohr stoffschlüssig befestigt und anschließend im Anschlussstutzen stoffschlüssig fixiert werden oder aber zunächst stoffschlüssig im Anschlussstutzen befestigt werden, bevor die stoffschlüssige Verbindung zum Wellrohr ausgebildet wird.

Eine solchermaßen ausgebildete Verbindungsanordnung ist für eine Vielzahl sogenannter MFS-Applikationen, zum Beispiel für die Führung von Wasserstoff in Brennstoffzellen und dergleichen geeignet.

Weitere Ausgestaltungen und Einzelheiten der Erfindung werden nachfolgend anhand von Ausführungsbeispielen in der Zeichnung erläutert. Es zeigen:
- Figur 1: eine erste Ausführungsform einer erfindungsgemäßen Verbindungsanordnung im Längsschnitt;
- Figur 2: eine zweite Ausführungsform einer erfindungsgemäßen Verbindungsanordnung im Längsschnitt;
- Figur 3: eine dritte Ausführungsform einer erfindungsgemäßen Verbindungsanordnung im Längsschnitt.

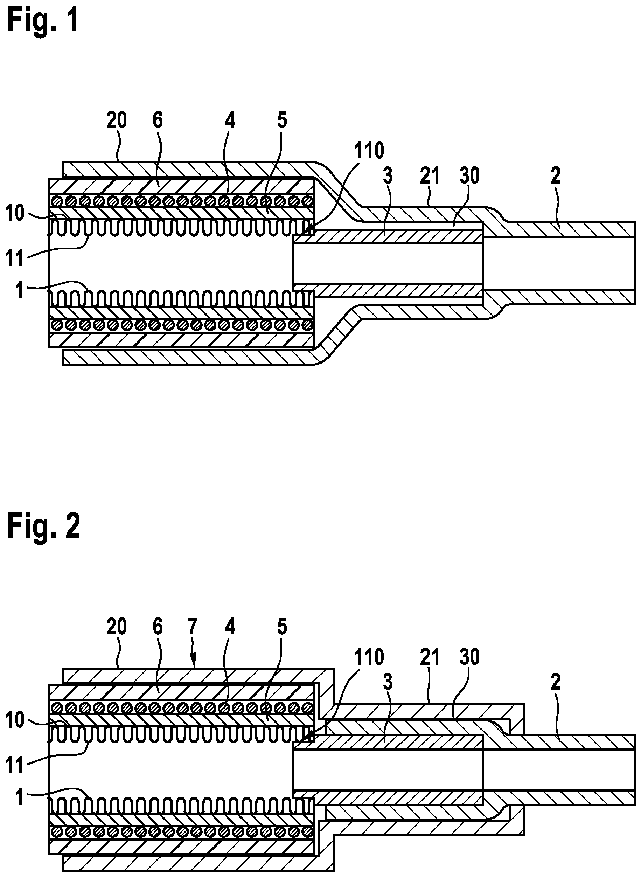

Aus den Figuren 1 bis 3 sind Längsschnitte durch alternative Ausführungsformen von Verbindungsanordnungen ersichtlich, bei denen ein fluidführendes Edelstahl-Wellrohr 1 über einen Adapter 3 mit einem Anschlussstutzen 2 verbunden ist, wobei es sich bei dem Anschlussstutzen 2 sowohl um einen Anschlussstutzen an einer hier nicht dargestellten Arbeitsmaschine oder einem Vorratsbehälter als auch um einen Teilabschnitt einer Rohrleitung handeln kann.

In den dargestellten Ausführungsbeispielen gemäß den Figuren 1 bis 3 ist das aus Edelstahl hergestellte Wellrohr 1 im dargestellten längs verlaufenden Querschnitt mit einer Vielzahl regelmäßig aufeinanderfolgender Wellenberge 10 und Wellentäler 11 ausgeführt, wobei das Wellrohr 1 zur Schaffung einer ausreichenden Druck- und Zugfestigkeit außenseitig zunächst von einer auf den Wellenbergen 10 aufliegenden Gummi- oder Kunststofflage 5 eingehüllt ist, um die konzentrisch umlaufend eine Faserlage 4 aus zugfesten Fasern zum Beispiel auf Basis von Aramid aufgebracht ist und ihrerseits von einer weiteren Gummi- oder Kunststofflage 6 umhüllt ist. Insofern ist die Faserlage 4 zwischen das Wellrohr 1 außenseitig umhüllenden Gummi- oder Kunststofflagen 5, 6 eingebettet.

Zur Ausbildung der Verbindungsanordnung ist im Ausführungsbeispiel gemäß Figur 1 am durch Ablängen des zunächst endlosen Edelstahl-Wellrohres erzeugten freien Endes ein aus einem Rohrabschnitt aus Edelstahl hergestellter Adapter 3 stirnseitig in das Innenvolumen des Wellrohrs 1 zwischen den Wellentälern 11 eingesteckt, wozu der Adapter 3 gegebenenfalls mit einer aus der Figur 1 ersichtlichen endseitigen Abstufung versehen ist und im dargestellten Ausführungsbeispiel mit den beiden ersten zum stirnseitigen Ende des Wellrohrs 1 benachbart liegenden Wellentälern 11 in Kontakt steht. In diesem Kontaktbereich mit den beiden Wellentälern 11 ist der Adapter 3 mit dem Wellrohr 1 stoffschlüssig durch eine geeignete Verschweißung verbunden, zum Beispiel mittels Laser-, Plasma-, WIG-Schweißen oder ähnliches, was anhand des Bezugszeichens 110 in der Schweißfuge verdeutlicht wird.

Eine solche Verschweißung kann leicht vorgenommen werden, da im Bereich der am Adapter 3 anliegenden Wellentäler die außenseitig am Wellrohr 1 angebrachte Umhüllung in Gestalt der Gummi- oder Kunststofflagen 5, 6 sowie der Faserlage 4 nicht anliegt. Gegebenenfalls könnte im Bereich der auszubildenden stoffschlüssigen Verbindung das Wellrohr auch von den außenseitig umhüllenden Gummi- oder Kunststofflagen 5, 6 sowie der Faserlage 4 befreit werden, vergleichbar einem abisolierten Elektro-Aderkabel. Darüber hinaus wird beim Ablängen des Edelstahl-Wellrohrs 1 durch eine entsprechende Sensorik zum Beispiel mittels Induktion sichergestellt, dass die Trennung immer im Bereich eines Wellentals 11 vorgenommen wird.

Im Ergebnis verfügt somit das Wellrohr 1 über einen endseitig eingebrachten und stoffschlüssig mit dem Wellrohr verbundenen Adapter 3, der das Wellrohr 1 axial fortsetzt und über dieses vorsteht und infolge seiner Ausbildung als Rohrabschnitt ein durch das Wellrohr 1 geführtes Fluid weiterleitet.

Der dem Anschluss des Wellrohrs 1 dienende Anschlussstutzen 2 ist aus einem duktilen Material, zum Beispiel aus einem Aluminium-Rohrabschnitt gefertigt und ist in Richtung seines in der Zeichnung dargestellten Anschlussendes zweifach stufenförmig erweitert, wobei die erste stufenförmige Erweiterung 21 so bemessen und angeordnet ist, dass sie den über das Wellrohr 1 axial vorstehenden Adapter 3 innenseitig aufnimmt, während die gegenüber der ersten stufenförmigen Erweiterung 21 nochmals im Durchmesser vergrößerte anschließende zweite stufenförmige Erweiterung 20 so angeordnet und bemessen ist, dass sie den an den Adapter 3 anschließenden Längenabschnitt des Wellrohrs 1 mitsamt der aufgebrachten Umhüllung aus Gummi- oder Faserlage 5, 6 sowie der Faserlage 4 innenseitig aufnimmt.

Zur Schaffung einer mechanisch belastbaren Verbindung wird die zweite stufenförmige Erweiterung 20, die in etwa den gleichen Innendurchmesser wie der Außendurchmesser des Wellrohrs 1 mitsamt der aufgebrachten Faserlage 4 sowie Gummi- oder Kunststofflagen 5, 6 aufweist und insoweit als Fassung für das Wellrohr 1 dient, auf dem Wellrohr 1 verpresst.

Anschließend oder alternativ auch vor dem Verpressen der zweiten stufenförmigen Erweiterung 20 mit dem Wellrohr 1 wird die erste stufenförmige Erweiterung 21 von ihrer Außenseite her zum Beispiel im Magnetic-Pulse-Verfahren im mit Bezugszeichen 30 gekennzeichneten Bereich entlang ihrer Innenoberfläche mit der Außenoberfläche des eingeführten Längenabschnittes des Adapters 3 verschweißt und insofern ebenfalls stoffschlüssig verbunden.

Eine solche Verbindungsanordnung verfügt somit ausschließlich über stoffschlüssig ausgeführte Dichtflächen 30, 110 und erreicht niedrigste Permeationsraten bei höchster Dauerfestigkeit.

In einer alternativen Ausgestaltung gemäß der Darstellung der Figur 2, bei der gleiche Teile mit gleichen Bezugsziffern gekennzeichnet sind und zur Vermeidung von Wiederholungen nicht nochmals gesondert erläutert werden, sofern dies nicht zum Verständnis der Erfindung erforderlich ist, wird der Adapter 3 ebenfalls endseitig und das Wellrohr 1 verlängernd mit den Wellentälern 11 desselben stoffschlüssig verschweißt, jedoch wird der Anschlussstutzen 2 mehrteilig ausgeführt und im Bereich seines Anschlussendes lediglich einstufig aufgeweitet, um den Adapter 3 aufzunehmen. Die Innenoberfläche des aufgeweiteten Anschlussstutzens 2 kann sodann mit der aufgenommenen Außenoberfläche des Adapters 3 beispielsweise durch eine Lötverbindung stoffschlüssig verbunden werden. Anschließend wird eine zweifach aufgeweitete Aluminiummuffe 7 aufgebracht und im Bereich der ersten Aufweitung 210 mit dem Anschlussstutzen 2 und im Bereich der stufenförmig anschließenden zweiten Aufweitung 20 mit dem Wellrohr 1 verpresst.

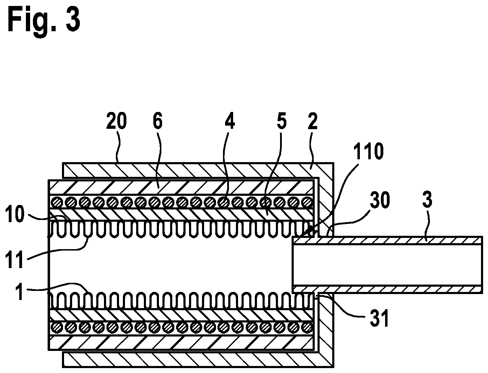

In der nochmals abgewandelten Ausführung der Verbindungsanordnung gemäß Figur 3 ist der Adapter 3 ebenfalls mit Wellentälern 11 des Wellrohres 1 im mit Bezugszeichen 110 gekennzeichneten Bereich verschweißt, d. h. stoffschlüssig verbunden, allerdings ist der Anschlussstutzen 2 lediglich topfförmig ausgebildet und verfügt über eine Aufweitung 20, welche das Wellrohr 1 mitsamt der außenseitig umhüllenden Gummi- oder Kunststofflagen 5, 6 sowie der dazwischen angeordneten Faserlage 4 aufnimmt und mit dieser verpresst ist. Andererseits ist im Bodenbereich des topfförmigen Anschlussstutzens 2 eine Durchgangsbohrung vorgesehen, durch welche der das Wellrohr 1 fortsetzende Adapter 3 hindurchgeführt ist und im mit Bezugszeichen 30 gekennzeichneten Bereich stoffschlüssig zum Beispiel durch eine Lötverbindung verbunden ist. Zur Schaffung einer definierten Anlagefläche am Wellrohr 1 einerseits und am Anschlussstutzen 2 andererseits ist der Adapter 3 in diesem Ausführungsbeispiel mit einem umlaufenden Kragen 31 versehen.

Die vorangehend erläuterte Verbindungsanordnung zeichnet sich insoweit durch leicht und kostengünstig herstellbare Komponenten sowie durch einfache und in verkürzter Zeit ablaufende Prozessschritte bei der Herstellung der Verbindungsanordnung aus, kommt mit geringer Teileanzahl aus und bietet durch Rückgriff auf ausschließlich stoffschlüssig hergestellte Dichtstellen eine erhöhte Prozesssicherheit.

### Bezugszeichenliste

- 1: Wellrohr
- 2: Anschlussstutzen
- 3: Adapter
- 4: Faserlage
- 5, 6: Gummi- oder Kunststofflagen
- 7: Muffe
- 10: Wellenberg
- 11: Wellental
- 20: abgestufte Aufweitung
- 21: abgestufte Aufweitung
- 30: stoffschlüssige Verbindung
- 110: stoffschlüssige Verbindung
- 210: abgestufte Aufweitung

## Patentansprüche

1. Verbindungsanordnung umfassend ein Wellrohr (1), einen Anschlussstutzen (2) und einen Adapter (3), wobei das Wellrohr (1) aus einem metallischen Werkstoff gebildet ist und einen Querschnitt mit wechselweise aufeinanderfolgenden Wellenbergen (10) und Wellentälern (11) aufweist, der Anschlussstutzen (2) aus einem duktilen Rohrabschnitt gebildet ist und der Adapter (3) aus einem metallischen Rohrabschnitt endseitig in das Wellrohr (1) und dieses axial fortsetzend eingebracht und stoffschlüssig mit dem Wellrohr (1) verbunden und das Wellrohr (1) mit dem Adapter (3) in den Anschlussstutzen (2) eingesteckt ist, **dadurch gekennzeichnet, dass** der Anschlussstutzen (2) einen kleineren Innendurchmesser als der Außendurchmesser des Wellrohrs (1) aufweist und zur Aufnahme des Wellrohrs (1) und des Adapters (3) zu seinem Ende hin einen aufgeweiteten Innendurchmesser aufweist, der Anschlussstutzen (2) umfänglich mit dem eingesteckten Wellrohr (1) verpresst ist und der Adapter (3) entlang seiner Außenoberfläche stoffschlüssig mit der Innenoberfläche des Anschlussstutzens (2) und das Wellrohr (1) im Bereich mindestens eines Wellentals (11) desselben stoffschlüssig mit dem Adapter (3) verbunden ist.

2. Verbindungsanordnung nach Anspruch 1, **dadurch gekennzeichnet, dass** der Anschlussstutzen (2) zweifach abgestuft aufgeweitet ist, wobei das Wellrohr (1) in die abgestufte Aufweitung (20) mit dem größten Innendurchmesser eingesteckt und mit dieser verpresst ist und der Adapter (3) in die abgestufte Aufweitung (21) mit dem kleineren Innendurchmesser eingesteckt und stoffschlüssig mit dieser verbunden ist.

3. Verbindungsanordnung nach einem der Ansprüche 1 oder 2, **dadurch gekennzeichnet, dass** der Adapter (3) mit mindestens einem Wellental (11) des Wellrohres (1) verschweißt ist.

4. Verbindungsanordnung nach einem der Ansprüche 1 bis 3, **dadurch gekennzeichnet, dass** der Adapter (3) aus einem Edelstahl-Rohrabschnitt gebildet ist.

5. Verbindungsanordnung nach einem der Ansprüche 1 bis 4 **dadurch gekennzeichnet, dass** das Wellrohr (1) außenseitig mit einer Faserlage (4) aus zugfesten Fasern umhüllt ist.

6. Verbindungsanordnung nach Anspruch 5, **dadurch gekennzeichnet, dass** die Faserlage (4) zwischen das Wellrohr (1) außenseitig umhüllenden Gummi- oder Kunststofflagen (5, 6) eingebettet ist.

7. Verbindungsanordnung nach einem der Ansprüche 1 bis 6, **dadurch gekennzeichnet, dass** das Wellrohr (1) aus Edelstahl gebildet ist.

8. Verbindungsanordnung nach einem der Ansprüche 1 bis 7, **dadurch gekennzeichnet, dass** der Adapter (3) mit dem Anschlussstutzen (2) verschweißt, verklebt oder verlötet ist.

9. Verbindungsanordnung nach einem der Ansprüche 1 bis 8, **dadurch gekennzeichnet, dass** der Anschlussstutzen (2) aus einem Aluminium-Rohrabschnitt gebildet ist.

10. Verbindungsanordnung nach einem der Ansprüche 1 bis 9, **dadurch gekennzeichnet, dass** der Anschlussstutzen mehrteilig ausgebildet ist und eine Muffe (7) umfasst, in die das Wellrohr (1) eingesteckt und mit dieser verpresst ist.

11. Verfahren zum Herstellen einer Verbindungsanordnung nach einem der vorangehenden Ansprüche, umfassend Bereitstellen des an den Anschlussstutzen (2) anzuschließenden Wellrohrs (1) und des Adapters (3), endseitiges Einbringen des Adapters (3) in das Wellrohr (1) und stoffschlüssiges Verbinden mit mindestens einem Wellental (11) des Wellrohres (1) dergestalt, dass der Adapter (3) das Wellrohr (1) axial fortsetzt, Aufweiten des Anschlussendes des Anschlussstutzens (2) und Einführen des Wellrohrs (1) mit dem axial fortsetzenden Adapter (3) in den Anschlussstutzen (2) und Verpressen des das Wellrohr (1) umgebenden Anschlussendes mit dem Wellrohr (1) sowie stoffschlüssiges Verbinden des in den Anschlussstutzen (2) eingeführten Adapters (3) mit dem Anschlussstutzen (2).

## Claims

1. Connection arrangement comprising a corrugated pipe (1), a connecting piece (2) and an adapter (3), wherein the corrugated pipe (1) is formed from a metal material and has a cross section with corrugation crests (10) and corrugation troughs (11) which follow one another in alternating fashion, the connecting piece (2) is formed from a ductile pipe section, and the adapter (3), consisting of a metal pipe section, is introduced into the end of the corrugated pipe (1) so as to axially continue the latter and is materially bonded with the corrugated pipe (1), and the corrugated pipe (1) with the adapter (3) is plugged into the connecting piece (2), **characterized in that** the connecting piece (2) has a smaller inside diameter than the outside diameter of the corrugated pipe (1) and has a widened inside diameter towards its end in order to receive the corrugated pipe (1) and the adapter (3), the connecting piece (2) is circumferentially pressed with the plugged-in corrugated pipe (1), and the adapter (3) is materially bonded along its outer surface with the inner surface of the connecting piece (2), and the corrugated pipe (1) is materially bonded, in the region of at least one corrugation trough (11) thereof, with the adapter (3).

2. Connection arrangement according to Claim 1, **characterized in that** the connecting piece (2) is widened in a doubly stepped manner, wherein the corrugated pipe (1) is plugged into the stepped widening (20) with the largest inside diameter and pressed therewith, and the adapter (3) is plugged into the stepped widening (21) with the smaller inside diameter and materially bonded therewith.

3. Connection arrangement according to either of Claims 1 and 2, **characterized in that** the adapter (3) is welded to at least one corrugation trough (11) of the corrugated pipe (1).

4. Connection arrangement according to one of Claims 1 to 3, **characterized in that** the adapter (3) is formed from a stainless steel pipe section.

5. Connection arrangement according to one of Claims 1 to 4, **characterized in that** the corrugated pipe (1) is enveloped on its outer side with a fibre layer (4) consisting of high-tensile-strength fibres.

6. Connection arrangement according to Claim 5, **characterized in that** the fibre layer (4) is embedded between rubber or plastic layers (5, 6) which envelop the corrugated pipe (1) on its outer side.

7. Connection arrangement according to one of Claims 1 to 6, **characterized in that** the corrugated pipe (1) is formed from stainless steel.

8. Connection arrangement according to one of Claims 1 to 7, **characterized in that** the adapter (3) is welded, adhesively bonded or soldered to the connecting piece (2).

9. Connection arrangement according to one of Claims 1 to 8, **characterized in that** the connecting piece (2) is formed from an aluminium pipe section.

10. Connection arrangement according to one of Claims 1 to 9, **characterized in that** the connection piece is of multi-part design and comprises a sleeve (7) into which the corrugated pipe (1) is plugged and pressed therewith.

11. Method for producing a connection arrangement according to one of the preceding claims, comprising providing the corrugated pipe (1) and the adapter (3) which are to be connected to the connecting piece (2), introducing the adapter (3) into the end of the corrugated pipe (1) and materially bonding it with at least one corrugation trough (11) of the corrugated pipe (1) in such a way that the adapter (3) axially continues the corrugated pipe (1), widening the connection end of the connecting piece (2) and inserting the corrugated pipe (1) with the axially continuing adapter (3) into the connecting piece (2) and pressing the connection end, which surrounds the corrugated pipe (1), with the corrugated pipe (1), and materially bonding the adapter (3) inserted into the connecting piece (2) with the connecting piece (2).

## Revendications

1. Agencement de raccordement, comprenant un tube ondulé (1), un raccord (2) et un adaptateur (3),
dans lequel le tube ondulé (1) est formé à partir d'un matériau métallique et présente une section transversale pourvue de crêtes (10) et de creux (11) consécutifs en alternance, le raccord (2) est formé à partir d'une section de tube ductile, et l'adaptateur (3) formé à partir d'une section de tube métallique est côté extrémité introduit dans le tube ondulé (1) en prolongeant celui-ci axialement et est relié au tube ondulé (1) par liaison de matière, et le tube ondulé (1) avec l'adaptateur (3) est emmanché dans le raccord (2),
**caractérisé en ce que** le raccord (2) présente un diamètre intérieur inférieur au diamètre extérieur du tube ondulé (1) et présente en direction de son extrémité un diamètre intérieur élargi pour recevoir le tube ondulé (1) et l'adaptateur (3), le raccord (2) est comprimé sur la périphérie avec le tube ondulé (1) emmanché, et l'adaptateur (3) est relié le long de sa surface extérieure par liaison de matière à la surface intérieure du raccord (2), et le tube ondulé (1) est au niveau d'au moins un creux (11) de celui-ci relié à l'adaptateur (3) par liaison de matière.

2. Agencement de raccordement selon la revendication 1, **caractérisé en ce que** le raccord (2) est élargi de manière doublement graduée, dans lequel le tube ondulé (1) est emmanché dans l'élargissement gradué (20) ayant le plus grand diamètre intérieur et est comprimé avec celui-ci, et l'adaptateur (3) est emmanché dans l'élargissement gradué (21) ayant le diamètre intérieur plus petit et est relié à celui-ci par liaison de matière.

3. Agencement de raccordement selon l'une quelconque des revendications 1 ou 2, **caractérisé en ce que** l'adaptateur (3) est soudé avec au moins un creux (11) du tube ondulé (1).

4. Agencement de raccordement selon l'une quelconque des revendications 1 à 3, **caractérisé en ce que** l'adaptateur (3) est formé à partir d'une section de tube en acier inox.

5. Agencement de raccordement selon l'une quelconque des revendications 1 à 4, **caractérisé en ce que** le tube ondulé (1) est gainé sur la face extérieure d'une couche de fibres (4) en fibres résistant à la traction.

6. Agencement de raccordement selon la revendication 5, **caractérisé en ce que** la couche de fibres (4) est incorporée entre des couches de caoutchouc ou de matière plastique (5, 6) gainant le tube ondulé (1) sur la face extérieure.

7. Agencement de raccordement selon l'une quelconque des revendications 1 à 6, **caractérisé en ce que** le tube ondulé (1) est réalisé en acier inox.

8. Agencement de raccordement selon l'une quelconque des revendications 1 à 7, **caractérisé en ce que** l'adaptateur (3) est soudé, collé ou brasé au raccord (2).

9. Agencement de raccordement selon l'une quelconque des revendications 1 à 8, **caractérisé en ce que** le raccord (2) est formé à partir d'une section de tube en aluminium.

10. Agencement de raccordement selon l'une quelconque des revendications 1 à 9, **caractérisé en ce que** le raccord est réalisé en plusieurs parties et comprend un manchon (7) dans lequel le tube ondulé (1) est emmanché et comprimé avec celui-ci.

11. Procédé de fabrication d'un agencement de raccordement selon l'une quelconque des revendications précédentes, comprenant la fourniture du tube ondulé (1) à raccorder au raccord (2) et de l'adaptateur (3), l'introduction côté extrémité de l'adaptateur (3) dans le tube ondulé (1) et le raccordement par liaison de matière à au moins un creux (11) du tube ondulé (1) de telle sorte que l'adaptateur prolonge axialement le tube ondulé, l'élargissement de l'extrémité de raccordement du raccord (2) et l'introduction du tube ondulé (1) avec l'adaptateur de prolongement axial (3) dans le raccord (2) et la compression de l'extrémité de raccordement entourant le tube ondulé (1) avec le tube ondulé (1) ainsi que le raccordement par liaison de matière de l'adaptateur (3) introduit dans le raccord (2) au raccord (2).
